# EUROPEAN PATENT SPECIFICATION

(11) **EP 3 818 811 B1**
(45) Date of publication and mention of the grant of the patent: **03.09.2025**
(21) Application number: 19207276.7
(22) Date of filing: 05.11.2019
(51) Int. Cl.: A01F 12/20

(54) **AGRICULTURAL HARVESTER INCLUDING A THRESHING DRUM WITH RASP BARS HAVING CROP EGRESS GAPS**
LANDWIRTSCHAFTLICHE ERNTEMASCHINE MIT EINER DRESCHTROMMEL MIT RASPELSTÄBEN MIT ERNTEGUTAUSTRITTSSPALTEN
MOISSONNEUSE AGRICOLE COMPRENANT UN TAMBOUR DE BATTAGE AVEC DES BARRES STRIÉES DOTÉES D'ESPACES D'ÉVACUATION DE RÉCOLTE

(43) Date of publication of application: 12.05.2021
(73) Proprietor: CNH Industrial Belgium N.V., 8210 Zedelgem (BE)
(72) Inventor: Van Hullebusch, Bart G.L., 9910 Knesselare (BE); Van der Haegen, Johan A., 9890 Gavere (BE); Somers, Tom N.N., 9880 Aalter (BE); Jonckheere, Marc R.M., 8490 Snellegem (BE); Duquesne, Frank R.G., 8550 Zwevegem (BE); Ballegeer, Stefaan, 8730 Beernem (BE)
(74) Representative: CNH Industrial IP Department

(56) References cited:
- EP-A1- 1 559 307
- DE-A1- 19 615 778
- DE-U1- 8 226 879
- US-A- 4 796 645
- US-A- 6 074 297

## Description

### BACKGROUND OF THE INVENTION

The present invention relates to agricultural harvesters, and, more specifically to combine agricultural harvesters.

An agricultural harvester known as a "combine" is historically termed such because it combines multiple harvesting functions with a single harvesting unit, such as picking, threshing, separating, cleaning, and temporary storage. A combine includes a header which removes the crop from a field, and a feeder housing which transports the crop matter into a threshing drum. The threshing drum rotates within a perforated housing, which may be in the form of adjustable concaves and performs a threshing operation on the crop to remove the grain from the straw. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris, which is also called material other than grain (MOG), toward the rear of the combine. Non-grain crop material such as straw from the threshing section proceeds through a residue system, which may utilize a straw chopper to process the non-grain material and direct it out the rear of the combine. When the grain tank becomes full, the combine is positioned adjacent a vehicle into which the grain is to be unloaded, such as a semi-trailer, chaser bin, straight truck, or the like; and an unloading system on the combine is actuated to transfer the grain into the vehicle.

More particularly, a threshing and separation system includes one or more drums which can extend transversely, in the case of what is known as a "conventional" combine, or axially, in the case of what is known as a "rotary" combine, within the body of the combine, and which are partially or fully surrounded by a perforated concave. The crop material is threshed and separated by the rotation of the drum within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through horizontally arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger conveys the grain to a grain tank for temporary storage. The grain accumulates to the point where the grain tank is full and is discharged to an adjacent vehicle such as a semi trailer, chaser bin, straight truck or the like by an unloading system on the combine that is actuated to transfer grain into the vehicle.

In conventional combines, where the drum extends transversely, the drum has spaced apart rasp bars extending along the width of the drum. The bars rotate in order to contact crop material that has passed through the header and rub the crop material against the concave to thresh and separate the crop material. In some arrangements, the bars are staggered, relative to each other, to balance the weight of the drum during threshing and separation. While this arrangement is effective to thresh and separate crop material, there are certain instances where the drum can become off-balanced.

What is needed in the art is a threshing and separation system that addresses some of the previously described disadvantages of known threshing and separation systems.

Patent publication document US4796645 discloses a threshing drum comprising rasp bars and inwardly curved cover plates.

Patent publication document EP1559307A1 discloses a threshing drum comprising rasp bars and cover plates provided with a driver, which may be in the form of a paddle. On the back side, the cover plates are provided with a reinforcement profile.

### SUMMARY OF THE INVENTION

The present invention provides a threshing drum for a threshing and separation system of an agricultural harvester includes: a drum frame including at least one drum frame member, the drum frame defining an axis of rotation; a plurality of rasp bars coupled to the drum frame, each of the rasp bars being circumferentially spaced from adjacent rasp bars about the axis of rotation; and a plurality of cover plates coupled to the drum frame, each of the cover plates being disposed between adjacent rasp bars. A crop egress gap is defined between each of the cover plates and an adjacent rasp bar and is sized to allow egress of crop material out from an interior of the drum during rotation of the drum.

In some embodiments, the plurality of rasp bars comprises a first rasp bar and a second rasp bar that extends parallel to the first rasp bar and is circumferentially staggered with the first rasp bar relative to the axis of rotation.

In some embodiments, at least one of the cover plates comprises a first portion comprising a lip that is hooked underneath an adjacent rasp bar. At least one of the cover plates may comprise a second portion opposite the first portion that is connected to the at least one drum frame member. The second portion may be bolted to the at least one drum frame member.

According to the invention, the cover plates comprise an outer surface configured to push crop material against a concave during rotation and an inner surface configured to direct crop material toward the crop egress gaps during rotation. The cover plates comprise an outer portion including the outer surface and an inner portion including the inner surface, the outer portion and the inner portion defining a pocket therebetween.

In some embodiments, the cover plates comprise a first cover plate and a second cover plate that is non-identical to the first cover plate. A first crop egress gap defined between a first rasp bar and the first cover plate may be larger than a second crop egress gap defined between a second rasp bar and the second cover plate.

In some embodiments, all of the rasp bars are at least partially offset with the other rasp bars in a direction that extends parallel to the axis of rotation.

In some embodiments, the at least one drum frame member comprises a plurality of drum frame members and each of the rasp bars are coupled to a pair of adjacent drum frame members.

In some embodiments, the at least one drum frame member is a disk.

In some exemplary embodiments provided according to the present disclosure, a threshing and separation system for an agricultural harvester includes the previously described threshing drum and a concave placed adjacent to the threshing drum such that rotation of the threshing drum rubs material against the concave.

In some exemplary embodiments provided according to the present disclosure, an agricultural harvester includes a chassis carrying the previously described threshing and separation system with the previously described threshing drum.

A potential advantage that may be realized by the exemplary embodiments disclosed herein is that the crop egress gap allows crop material that would normally get trapped inside the drum to egress out of the interior of the drum, reducing the potential for crop buildup in the drum that can cause a weight imbalance.

Another advantage is that the cover plates can be shaped to guide crop material from the interior of the drum to the crop egress gap during rotation to assist with removal of trapped crop material.

Yet another advantage is that incorporating the crop egress gap can increase the yield of crop material by reducing the amount of crop material that gets trapped and spoiled inside the drum.

Yet another advantage is that the overall weight of the drum can be decreased by reducing the amount of trapped crop material, reducing the power requirements to rotate the drum.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a side view of an exemplary embodiment of an agricultural harvester in the form of a combine including a threshing and separation system, provided in accordance with the present disclosure;
FIG. 2 is a perspective view of a threshing drum of the threshing and separation system illustrated in FIG. 1 without cover plates;
FIG. 3 is a perspective view of the threshing drum of FIG. 2 with a plurality of cover plates, provided in accordance with the present disclosure;
FIG. 4 is a sectional side view of the threshing drum shown in FIGS. 2-3;
FIG. 5 is a perspective view of an exemplary embodiment of a cover plate incorporated in the threshing drum of FIGS. 2-3;
FIG. 6 is a perspective view of another exemplary embodiment of a cover plate incorporated in the threshing drum of FIGS. 2-3; and
FIG. 7 is a perspective view of yet another exemplary embodiment of a cover plate incorporated in the threshing drum of FIGS. 2-3.

Corresponding reference characters indicate corresponding parts throughout the several views. The exemplification set out herein illustrates one embodiment of the invention, and such exemplification is not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

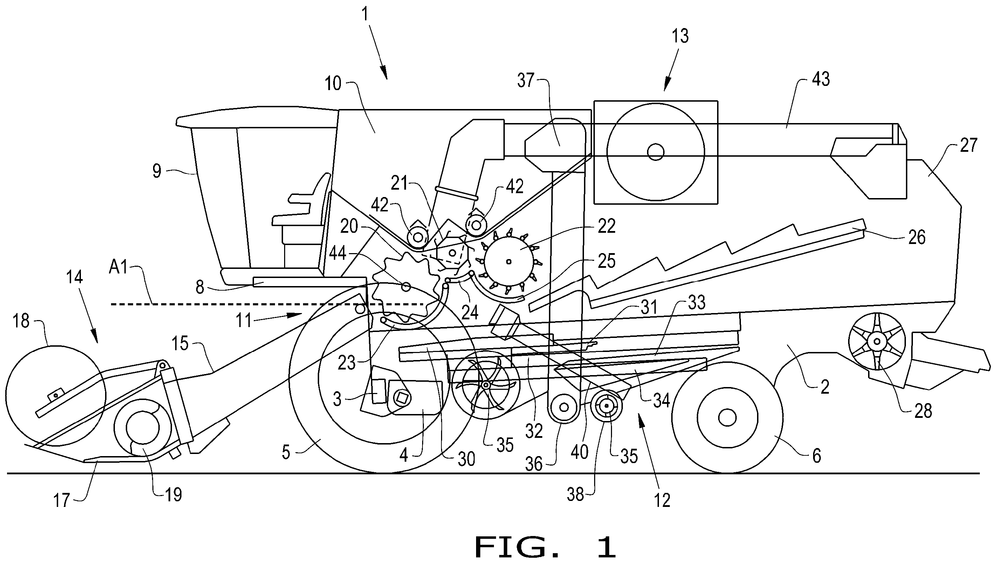

Referring now to the drawings, and more particularly to FIG. 1, a combine harvester, generally indicated at 1, comprises a chassis 2, supported on a fixed front axle 3 and an oscillating rear axle (not shown). The combine 1 defines a longitudinal axis A1 which extends generally parallel to a travel direction 47 of the combine 1. The front axle 3 carries a traction gearbox 4, that is drivingly connected to a pair of drive wheels 5, supporting the front portion of the frame 2. The rear axle is supported by a pair of steerable wheels 6. Mounted onto the main frame 2 are an operator's platform 8, with an operator's cab 9, a grain tank 10, a threshing and separation system 11, a grain cleaning system 12, and a power plant or engine 13. A conventional grain header 14 and straw elevator 15 extend forwardly of the main frame 2 and are pivotally secured thereto for generally vertical movement, that is controlled by extensible hydraulic cylinders (not shown).

As the combine harvester 1 is propelled forwardly over a field with standing crop, the latter is severed from the stubble by a sickle bar 17 at the front of the header 14 and guided by a reel 18 and an auger 19 to the straw elevator 15, that supplies the cut crop to the threshing and separation system 11. The crop received therein is threshed and separated, that is to say, the crop is rubbed and beaten, whereby the grain, seed or the like, is loosened and separated from the straw, crop waste or other discardable part of the crop. The combine harvester 1, illustrated in FIG. 1, comprises a threshing and separation system 11 including a threshing drum 20, a straw beater 21 and a separator drum 22, co-operating with a set of respectively adjacent concaves 23, 24, 25. Conventional straw walkers 26 are operable, in use, to discharge a mat of remaining crop material (i.e. mainly straw as most grain is separated therefrom) through a straw hood 27 to a straw chopper 28 that chops the straw and ejects it onto the field.

Grain that has been separated by the threshing and separation system 11 falls onto a first grain pan 30 of the cleaning system 12, that further also comprises a pre-cleaning sieve 31, positioned above a second grain pan 32, an upper chaffer sieve 33 and a lower grain sieve 34, disposed the one above the other behind and below the pre-cleaning sieve 31, and a cleaning fan 35.

The grain pans 30, 32 and the sieves 31, 33, 34 are oscillated generally back-and-forth for transporting threshed and separated grain from the first grain pan 30 to the pre-cleaning sieve 31 and the second grain pan 32 and therefrom to the sieves 33, 34. The same oscillatory movement spreads the grain across the sieves 31, 33, 34, while permitting the passage of cleaned grain by gravity through the apertures of these sieves. The grain on the sieves 31, 33, 34 is subjected to a cleaning action by the fan 35 that provides an air flow through the sieves to remove chaff and other impurities such as dust from the grain by making this material airborne for discharge from the machine.

Clean grain falls to a clean grain auger (not shown) in a clean grain auger trough 36 and is subsequently transferred by the auger and an elevator mechanism 37 to the grain tank 10. Incompletely threshed ears, the so-called "tailings", fall to a tailings auger (not shown) in a tailings auger trough 38. The tailings are transported sideways by this auger to a separate re-thresher 39 and returned by a tailings elevator 40 to the first grain pan 30 for repeated cleaning action.

A pair of grain tank augers 42 at the bottom of the grain tank 7 is used to urge the clean grain sideways to an unloading tube 43, wherein it is elevated by unloading augers (not shown) for discharge from the harvester 1.

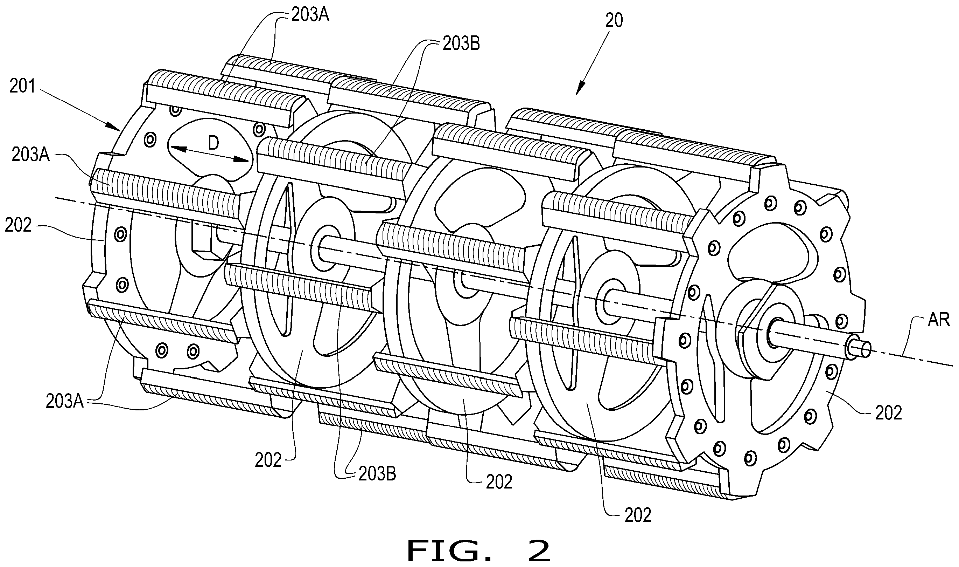

Referring now to FIG. 2, an exemplary embodiment of a threshing drum 20 for a threshing and separation system 11 of an agricultural harvester 1 is illustrated. The drum 20 includes a drum frame 201 including at least one drum frame member 202, illustrated as a plurality of drum frame members 202 that are aligned on an axis of rotation AR defined by the drum frame 201. Each of the drum frame members 202 may be in the shape of a disk, as illustrated, but it should be appreciated that the drum frame members 202 can have other shapes. Rasp bars 203A, 203B are coupled to the drum frame 201, with each of the rasp bars 203A, 203B being circumferentially spaced from adjacent rasp bars 203A, 203B about the axis of rotation AR. As illustrated, the rasp bars 203A, 203B may include first rasp bars 203A and second rasp bars 203B that extend parallel to the first rasp bars 203A but are circumferentially staggered with the first rasp bars 203A relative to the axis of rotation AR. By staggering the rasp bars 203A, 203B, the overall weight balance of the drum 20 can be improved. In some embodiments, all of the rasp bars 203A, 203B are at least partially offset with the other rasp bars 203A, 203B in a direction D that extends parallel to the axis of rotation AR, as illustrated in FIG. 2, to eliminate increased threshing zones where crop material is threshed harder. When the drum frame 201 includes multiple drum frame members 202, each rasp bar 203A, 203B may be coupled to a pair of adjacent drum frame members 202, as illustrated in FIG. 2.

In known threshing drums, cover plates are placed between adjacent rasp bars to tightly close the space between adjacent rasp bars, which may be seen in FIG. 2. While this is effective to close the space, certain issues have been observed with such a configuration. One particular issue that has been observed is that crop material inevitably ends up becoming trapped in an interior of the drum. The trapped crop material can accumulate to such an amount that the overall weight balance of the drum is disrupted at startup, which adversely affects operation. Further, the trapped crop material can spoil. The most efficient way to remove the trapped crop material from known threshing drums is to remove the cover plates and manually remove the trapped crop material, but this can take a significant amount of time and disrupt harvesting. Thus, removal of trapped crop material in the drum may only be done when convenient, e.g., at the end of a harvest season.

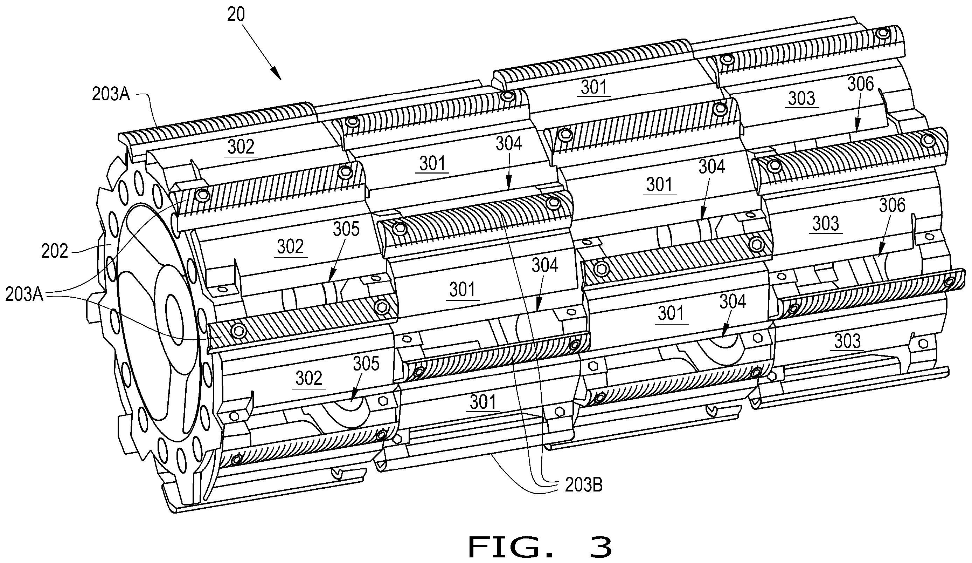

To address some of the previously described issues, and referring now to FIG. 3, the threshing drum 20 provided according to the present disclosure includes cover plates 301, 302, 303 that are disposed between adjacent rasp bars 203A, 203B such that crop egress gaps 304, 305, 306 are defined between each of the cover plates 301, 302, 303 and an adjacent rasp bar 203A, 203B. The crop egress gaps 304, 305, 306 are sized to allow egress of crop material out from an interior of the drum 20 during rotation of the drum 20 to reduce the likelihood of crop material becoming trapped inside the drum 20 and accumulating. Thus, while crop material will inevitably enter the interior of the drum 20 during operation, the crop egress gaps 304, 305, 306 provide an egress for the crop material to be pushed out of the interior of the drum 20 during rotation due to centrifugal forces and join the mat of crop outside the drum 20.

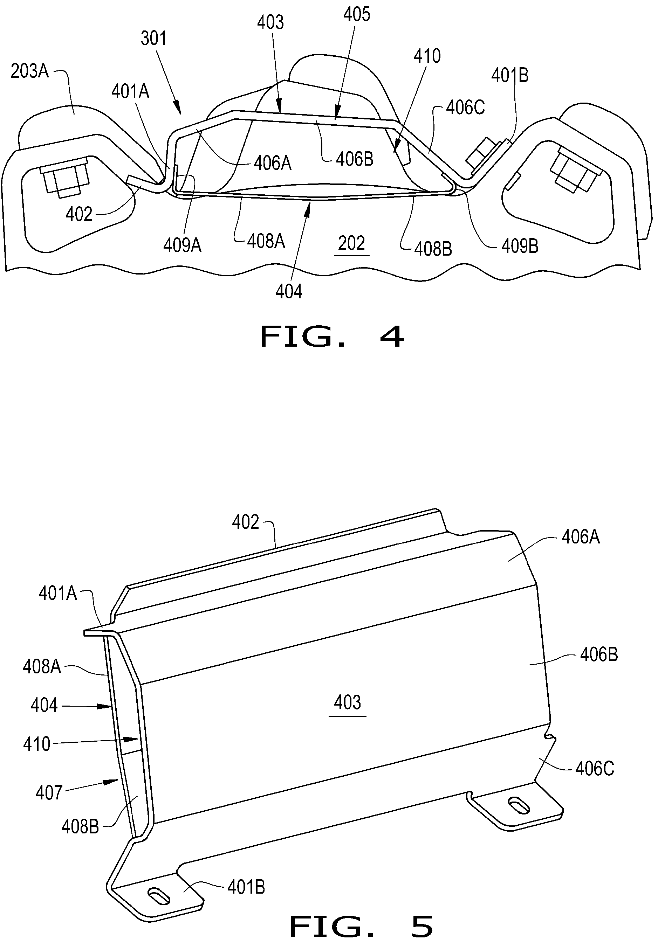

Referring now to FIG. 4, a sectional side view of the drum 20 is illustrated to show how one of the cover plates 301 is coupled to the drum frame 201. While the cover plate 301 is illustrated in FIG. 4, it should be appreciated that the cover plates 302 and 303 can be coupled to the drum frame 201 in a similar manner. The cover plate 301, by itself, is illustrated in FIG. 5. The cover plate 301 may include a first portion 401A that has a lip 402. The lip 402, as illustrated in FIG. 4, is hooked underneath an adjacent rasp bar 203A to support the first portion 401A of the cover plate 301. A second portion 401B of the cover plate 301, which is opposite the first portion 401A, may be coupled to one or more of the drum frame members 202. The second portion 401B may be, for example, bolted to two of the drum frame members 202, as illustrated in FIGS. 3 and 4. The first portion 401A and the second portion 401B may each be, for example, flanges. Coupling the cover plates 301, 302, 303 to the drum frame 201 in this manner is easy and convenient, allowing an operator to quickly remove the cover plates 301, 302, 303 when desired.

With further reference to FIG. 4, and referring to FIG. 5 as well, it is illustrated that the cover plate 301 has an outer surface 403 that is on the exterior of the drum 20 when mounted and an inner surface 404 that is on the interior of the drum 20 when mounted. The outer surface 403 is configured to push crop material against the concave 23 during rotation of the drum 20 to thresh and separate the crop material. The inner surface 404, on the other hand, is configured to direct crop material toward the crop egress gap 304 during rotation. By directing crop material toward the crop egress gap 304, the inner surface 404 assists in removing trapped crop material from the interior of the drum 20 to reduce crop material accumulation inside the drum 20.

The outer surface 403 may be part of an outer portion 405 of the cover plate 301. The outer portion 405 of the cover plate 301 may include a plurality of connected planar surfaces 406A, 406B, 406C that connect the first portion 401A to the second portion 401B. The planar surfaces 406A, 406B, 406C may each have a different width, relative to each other, so each of the surfaces 406A, 406B, 406C has a different surface area. The dimensions and orientations of the planar surfaces 406A, 406B, 406C may be adjusted, as desired, to direct crop material toward the concave 23 during rotation so the crop material may be threshed and separated. For example, the dimensions and orientations of the planar surfaces 406A, 406B, 406C may be adjusted to account for different crop materials being processed, e.g., the dimensions and orientations of the planar surfaces 406A, 406B, 406C may be different when corn is processed compared to when wheat is processed. It should thus be appreciated that the outer portion 405 may be adjusted in a variety of ways.

The inner surface 404 may be part of an inner portion 407 of the cover plate 301. The inner portion 407 may include a pair of converging surfaces 408A, 408B that each have a respective terminal portion 409A, 409B connected to the first portion 401A and the second portion 401B, respectively, of the cover plate 301. The surfaces 408A, 408B may have similar widths. The dimensions and orientations of the converging surfaces 408A, 408B may be adjusted, as desired, to direct crop material in the interior of the drum 20 toward the crop egress gap 304 due to centrifugal forces that arise during rotation, as previously described. For example, the dimensions and orientations of the converging surfaces 408A, 408B may be adjusted to account for different crop materials being processed, e.g., the dimensions and orientations of the converging surfaces 408A, 408B may be different when corn is processed compared to when wheat is processed. Further, the inner portion 407 and the outer portion 405 of the cover plate 301 are spaced apart from one another to form a pocket 410 therebetween. By forming the outer surface 403 on the outer portion 405 and the inner surface 404 on the inner portion 407, which is spaced apart from the outer portion 405, the crop material directing behavior of each of the surfaces 403, 404 can be independently tuned to provide the desired directing behavior for each surface 403, 404.

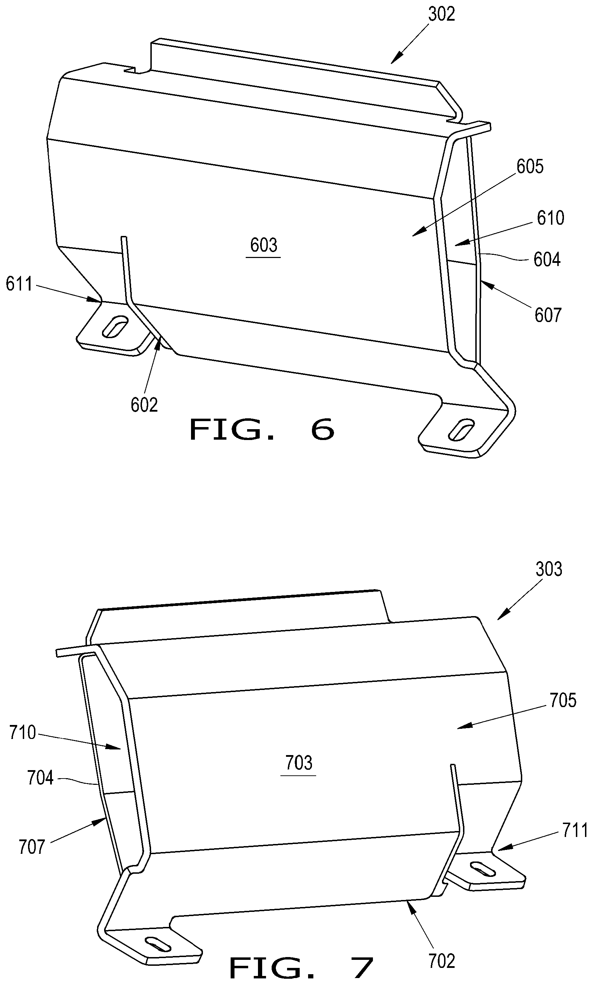

Referring now to FIGS. 6 and 7, the other cover plates 302 and 303 are illustrated. The cover plate 302 is illustrated in FIG. 6 and the cover plate 303 is illustrated in FIG. 7. As illustrated, the cover plates 302 and 303 are similar to the cover plate 301 in that each of the cover plates 302, 303 includes a respective outer surface 603, 703 that is configured to direct crop material toward the concave 23 during rotation and a respective inner surface 604, 704 that is configured to direct crop material toward a respective crop egress gap 305, 306 during rotation. The outer surfaces 603, 703 may be part of a respective outer portion 605, 705 and the inner surfaces 604, 704 may be part of a respective inner portion 607, 707 with pockets 610, 710 formed between the outer portions 605, 705 and the inner portions 607, 707, similar to the cover plate 301. Unlike the cover plate 301, each of the cover plates 302, 303 may have a discontinuous second portion 602, 702 that couples to the drum frame member(s) 202. As illustrated in FIG. 6, for example, the cover plates 302 may have a recessed region 611 of the second portion 602 that is radially recessed in relation to the rest of the second portion 602 and coupled to one of the drum frame members 202. The recessed region 611 may be, for example, located on a front of the cover plate 302 when mounted to the drum frame 201. Similarly, as illustrated in FIG. 7, the cover plates 303 may also have a recessed region 711 of the second portion 702 that is radially recessed in relation to the rest of the second portion 702 and coupled to one of the drum frame members 202. Unlike the recessed region 611 of the cover plate 302, the recessed region 711 of the cover plate 303 may be located on a rear of the cover plate 303 when mounted to the drum frame 201.

As can be appreciated from comparing the cover plates 301, 302, 303 illustrated in FIGS. 5-7, the cover plates 301, 302, 303 may be non-identical. The cover plates 302 and 303 may, for example, have a greater overall width than the cover plates 301 due to the distance between the outermost drum frame members 202 being greater than the distance between the innermost drum frame members 202. In some embodiments, the crop egress gaps 304, 305, 306 may be similar, i.e., a distance between the rasp bars 203A, 203B and an edge of the cover plates 301, 302, 303 is similar. Alternatively, the crop egress gaps 304, 305, 306 may be different. For example, the crop egress gaps 305, 306 between the cover plates 302, 303 and the rasp bars 203A, 203B may be larger than the crop egress gap 304 between the cover plates 301 and the rasp bars 203A, 203B. In other words, the crop egress gaps 304 between the cover plates 301 and the rasp bars 203A, 203B may be smaller than the crop egress gaps 305, 306. In some embodiments, the crop egress gaps 305 between the cover plates 302 and the rasp bars 203A, 203B may be the largest of the cross egress gaps 304, 305, 306 due to the crop egress gaps 305 being closer to a front of the drum 20 where crop material is still relatively unthreshed and unseparated, and thus larger in size.

From the foregoing, it should be appreciated that the drum 20 provided according to the present disclosure with cover plates 301, 302, 303 that form crop egress gaps 304, 305, 306 with adjacent rasp bars 203A, 203B is less prone to trapping crop material inside the drum 20 than known threshing drums. The cover plates 301, 302, 303 can be configured to have outer surfaces 403, 603, 703 that direct crop material toward the concave 23 to improve threshing and separation performance while having inner surfaces 404, 604, 704 that direct crop material toward the crop egress gaps 304, 305, 306 to reduce crop material accumulation inside the drum 20. The drum 20 provided according to the present disclosure is thus less prone to weight off-balancing at startup due to crop material accumulation inside the drum 20 and also can increase crop material yield due to crop material being less prone to becoming trapped inside the drum 20 and spoiling.

## Claims

1. A threshing drum (20) for a threshing and separation system (11) of an agricultural harvester (1), comprising:
a drum frame (201) comprising at least one drum frame member (202), the drum frame defining an axis of rotation (AR);
a plurality of rasp bars (203A, 203B) coupled to the drum frame (201), each of the rasp bars (203A, 203B) being circumferentially spaced from adjacent rasp bars (203A, 203B) about the axis of rotation (AR); and
a plurality of cover plates (301, 302, 303) coupled to the drum frame (201), each of the cover plates (301, 302, 303) being disposed between adjacent rasp bars (203A, 203B);
wherein a crop egress gap (304, 305, 306) is defined between each of the cover plates (301, 302, 303) and an adjacent rasp bar (203A, 203B) and is sized to allow egress of crop material out from an interior of the drum (20) during rotation of the drum (20),
**characterized in that**
- the cover plates (301, 302, 303) comprise an outer surface (403, 603, 703) configured to push crop material against a concave (23) during rotation and an inner surface (404, 604, 704) configured to direct crop material toward the crop egress gaps (304, 305, 306) during rotation,
- the cover plates (301, 302, 303) comprise an outer portion (405, 605, 705) comprising the outer surface (403, 603, 703) and an inner portion (407, 607, 707) comprising the inner surface (404, 604, 704), the outer portion (405, 605, 705) and the inner portion (407, 607, 707) defining a pocket (410, 610, 710) therebetween.

2. The threshing drum (20) of claim 1, wherein the plurality of rasp bars (203A, 203B) comprises a first rasp bar (203A) and a second rasp bar (203B) that extends parallel to the first rasp bar (203A) and is circumferentially staggered with the first rasp bar (203A) relative to the axis of rotation (AR).

3. The threshing drum (20) of any of the preceding claims, wherein at least one of the cover plates (301) comprises a first portion (401A) comprising a lip (402) that is hooked underneath an adjacent rasp bar (203A, 203B).

4. The threshing drum (20) of claim 3, wherein at least one of the cover plates (301) comprises a second portion (401B) opposite the first portion (401A) that is connected to the at least one drum frame member (202).

5. The threshing drum (20) of claim 4, wherein the second portion (401B) is bolted to the at least one drum frame member (202).

6. The threshing drum (20) of any of the preceding claims, wherein the cover plates (301, 302, 303) comprise a first cover plate (301) and a second cover plate (302, 303) that is non-identical to the first cover plate (301).

7. The threshing drum (20) of claim 1, wherein a first crop egress gap (304) defined between a first rasp bar (203A) and the first cover plate (301) is smaller than a second crop egress gap (305, 306) defined between a second rasp bar (203B) and the second cover plate (302, 303).

8. The threshing drum (20) of any of the preceding claims, wherein all of the rasp bars (203A, 203B) are at least partially offset with the other rasp bars (203A, 203B) in a direction (D) that extends parallel to the axis of rotation (AR).

9. The threshing drum (20) of any of the preceding claims, wherein the at least one drum frame member (202) comprises a plurality of drum frame members (202), each of the rasp bars (203A, 203B) being coupled to a pair of adjacent drum frame members (202).

10. The threshing drum (20) of any of the preceding claims, wherein the at least one drum frame member (202) is a disk.

11. A threshing and separation system (11) for an agricultural harvester (1), comprising the threshing drum (20) of any of the preceding claims and a concave (23) placed adjacent to the threshing drum (20) such that rotation of the threshing drum (20) rubs material against the concave (23).

12. An agricultural harvester (1), comprising a chassis (2) carrying the threshing and separation system (11) of claim 11.

## Patentansprüche

1. Dreschtrommel (20) für ein Dresch- und Trennsystem (11) einer landwirtschaftlichen Erntemaschine (1), umfassend:
einen Trommelrahmen (201), umfassend mindestens ein Trommelrahmenelement (202), wobei der Trommelrahmen eine Rotationsachse (AR) definiert;
eine Mehrzahl von Schlagleisten (203A, 203B), die mit dem Trommelrahmen (201) verbunden sind, wobei jede der Schlagleisten (203A, 203B) in Umfangsrichtung um die Rotationsachse (AR) beabstandet zu benachbarten Schlagleisten (203A, 203B) angeordnet ist; und
eine Mehrzahl von Abdeckplatten (301, 302, 303), die mit dem Trommelrahmen (201) verbunden sind, wobei jede der Abdeckplatten (301, 302, 303) zwischen benachbarten Schlagleisten (203A, 203B) angeordnet ist;
wobei ein Erntegut-Austrittsspalt (304, 305, 306) zwischen jeder der Abdeckplatten (301, 302, 303) und einer benachbarten Schlagleiste (203A, 203B) definiert ist und derart dimensioniert ist, dass während der Rotation der Trommel (20) Erntegut aus einem Inneren der Trommel (20) austreten kann,
**dadurch gekennzeichnet, dass**:
die Abdeckplatten (301, 302, 303) eine Außenseite (403, 603, 703) umfassen, die dazu eingerichtet ist, Erntegut während der Rotation gegen einen Korb (23) zu drücken, und eine Innenseite (404, 604, 704) umfassen, die dazu eingerichtet ist, Erntegut während der Rotation in Richtung der Erntegut-Austrittsspalte (304, 305, 306) zu lenken,
die Abdeckplatten (301, 302, 303) einen äußeren Abschnitt (405, 605, 705) umfassend die Außenseite (403, 603, 703) und einen inneren Abschnitt (407, 607, 707) umfassend die Innenseite (404, 604, 704) umfassen, wobei der äußere Abschnitt (405, 605, 705) und der innere Abschnitt (407, 607, 707) zwischen sich eine Tasche (410, 610, 710) definieren.

2. Dreschtrommel (20) nach Anspruch 1, wobei die Mehrzahl von Schlagleisten (203A, 203B) eine erste Schlagleiste (203A) und eine zweite Schlagleiste (203B) umfasst, die sich parallel zur ersten Schlagleiste (203A) erstreckt und relativ zur Rotationsachse (AR) in Umfangsrichtung zur ersten Schlagleiste (203A) versetzt ist.

3. Dreschtrommel (20) nach einem der vorhergehenden Ansprüche, wobei zumindest eine der Abdeckplatten (301) einen ersten Abschnitt (401A) umfasst, der eine Lippe (402) aufweist, die unter eine benachbarte Schlagleiste (203A, 203B) eingehakt ist.

4. Dreschtrommel (20) nach Anspruch 3, wobei zumindest eine der Abdeckplatten (301) einen zweiten Abschnitt (401B) gegenüber dem ersten Abschnitt (401A) umfasst, der mit dem mindestens einen Trommelrahmenelement (202) verbunden ist.

5. Dreschtrommel (20) nach Anspruch 4, wobei der zweite Abschnitt (401B) mit dem mindestens einen Trommelrahmenelement (202) verschraubt ist.

6. Dreschtrommel (20) nach einem der vorhergehenden Ansprüche, wobei die Abdeckplatten (301, 302, 303) eine erste Abdeckplatte (301) und eine zweite Abdeckplatte (302, 303) umfassen, die sich von der ersten Abdeckplatte (301) unterscheidet.

7. Dreschtrommel (20) nach Anspruch 1, wobei ein erster Erntegut-Austrittsspalt (304), der zwischen einer ersten Schlagleiste (203A) und der ersten Abdeckplatte (301) definiert ist, kleiner ist als ein zweiter Erntegut-Austrittsspalt (305, 306), der zwischen einer zweiten Schlagleiste (203B) und der zweiten Abdeckplatte (302, 303) definiert ist.

8. Dreschtrommel (20) nach einem der vorhergehenden Ansprüche, wobei alle Schlagleisten (203A, 203B) in einer Richtung (D), die parallel zur Rotationsachse (AR) verläuft, zumindest teilweise beabstandet zu den anderen Schlagleisten (203A, 203B).

9. Dreschtrommel (20) nach einem der vorhergehenden Ansprüche, wobei das mindestens eine Trommelrahmenelement (202) eine Mehrzahl von Trommelrahmenelementen (202) umfasst, wobei jede der Schlagleisten (203A, 203B) mit einem Paar benachbarter Trommelrahmenelemente (202) verbunden ist.

10. Dreschtrommel (20) nach einem der vorhergehenden Ansprüche, wobei das mindestens eine Trommelrahmenelement (202) eine Scheibe ist.

11. Dresch- und Trennsystem (11) für eine landwirtschaftliche Erntemaschine (1), umfassend die Dreschtrommel (20) nach einem der vorhergehenden Ansprüche und einen benachbart zur Dreschtrommel (20) angeordneten Korb (23), sodass bei Rotation der Dreschtrommel (20) Material gegen den Korb (23) gerieben wird.

12. Landwirtschaftliche Erntemaschine (1), umfassend ein Fahrgestell (2), das das Dresch- und Trennsystem (11) gemäß Anspruch 11 trägt.

## Revendications

1. Un batteur (20) pour un système de battage et de séparation (11) d'une moissonneuse agricole (1), comprenant :
un châssis de tambour (201) comprenant au moins une traverse de châssis de tambour (202), le châssis de tambour définissant un axe de rotation (AR) ;
une pluralité de battes (203A, 203B) couplées au châssis de tambour (201), chacune des battes (203A, 203B) étant espacée de manière circonférentielle des battes adjacentes (203A, 203B) autour de l'axe de rotation (AR) ; et
une pluralité de plaques de recouvrement (301, 302, 303) couplées au châssis de tambour (201), chacune des plaques de recouvrement (301, 302, 303) étant disposée entre des battes adjacentes (203A, 203B) ;
dans lequel un espace d'évacuation de récolte (304, 305, 306) est agencé entre chacune des plaques de recouvrement (301, 302, 303) et une batte adjacente (203A, 203B) et dimensionné pour permettre l'évacuation des matériaux récoltés hors de l'intérieur du tambour (20) pendant la rotation du tambour (20),
**caractérisé en ce que**
- les plaques de recouvrement (301, 302, 303) comprennent une surface extérieure (403, 603, 703) configurée pour pousser les matériaux récoltés contre un contre-batteur (23) pendant la rotation et une surface intérieure (404, 604, 704) configurée pour diriger les matériaux récoltés vers les espaces d'évacuation de récolte (304, 305, 306) pendant la rotation,
- les plaques de recouvrement (301, 302, 303) comprennent une partie extérieure (405, 605, 705) comprenant la surface extérieure (403, 603, 703) et une partie intérieure (407, 607, 707) comprenant la surface intérieure (404, 604, 704), la partie extérieure (405, 605, 705) et la partie intérieure (407, 607, 707) formant une poche (410, 610, 710) entre elles.

2. Le batteur (20) selon la revendication 1, dans lequel la pluralité de battes (203A, 203B) comprend une première batte (203A) et une seconde batte (203B) qui s'étend parallèlement à la première batte (203A) et est décalée de manière circonférentielle avec la première batte (203A) par rapport à l'axe de rotation (AR).

3. Le batteur (20) selon l'une quelconque des revendications précédentes, dans lequel au moins une des plaques de recouvrement (301) comprend une première partie (401A) comprenant une lèvre (402) qui est accrochée sous une batte adjacente (203A, 203B).

4. Le batteur (20) selon la revendication 3, dans lequel au moins l'une des plaques de recouvrement (301) comprend une seconde partie (401B) opposée à la première partie (401A) qui est raccordée à l'au moins une traverse de châssis du tambour (202).

5. Le batteur (20) selon la revendication 4, dans lequel la seconde partie (401B) est boulonnée à l'au moins une traverse de châssis du tambour (202).

6. Le batteur (20) selon l'une quelconque des revendications précédentes, dans lequel les plaques de recouvrement (301, 302, 303) comprennent une première plaque de recouvrement (301) et une seconde plaque de recouvrement (302, 303) qui n'est pas identique à la première plaque de recouvrement (301).

7. Le batteur (20) selon la revendication 1, dans lequel un premier espace d'évacuation de récolte (304) défini entre une première batte (203A) et la première plaque de recouvrement (301) est plus petit qu'un second espace d'évacuation de récolte (305, 306) défini entre une seconde batte (203B) et la seconde plaque de recouvrement (302, 303).

8. Le batteur (20) selon l'une quelconque des revendications précédentes, dans lequel toutes les battes (203A, 203B) sont au moins partiellement décalées par rapport aux autres battes (203A, 203B) dans une direction (D) qui s'étend parallèlement à l'axe de rotation (AR).

9. Le batteur (20) selon l'une quelconque des revendications précédentes, dans lequel l'au moins une traverse de châssis de tambour (202) comprend une pluralité de traverses de châssis de tambour (202), chacune des battes (203A, 203B) étant couplée à une paire de traverses de châssis du tambour adjacent (202).

10. Le batteur (20) selon l'une quelconque des revendications précédentes, dans lequel l'au moins une traverse de châssis de tambour (202) est un disque.

11. Un système de battage et de séparation (11) pour une moissonneuse agricole (1), comprenant le batteur (20) selon l'une quelconque des revendications précédentes et un contre-batteur (23) placé à côté du batteur (20) de sorte que la rotation du batteur (20) frotte les matériaux contre le contre-batteur (23).

12. Une moissonneuse agricole (1), comprenant un châssis (2) soutenant le système de battage et de séparation (11) selon la revendication 11.
